# EUROPÄISCHE PATENTSCHRIFT

(11) **EP 0 603 116 B1**
(45) Veröffentlichungstag und Bekanntmachung des Hinweises auf die Patenterteilung: **10.05.2000**
(21) Anmeldenummer: 93810787.7
(22) Anmeldetag: 15.11.1993
(51) Int. Cl.: C09B 62/45, C09B 62/473, C09B 62/51, D06P 1/38

(54) **Azoreaktivfarbstoffe**
Reactive azo dyestuffs
Colorants azoiques réactifs

(30) Priorität: 23.11.1992 CH 359092
(43) Veröffentlichungstag der Anmeldung: 22.06.1994
(73) Patentinhaber: Ciba Specialty Chemicals Holding Inc., 4057 Basel (CH)
(72) Erfinder: Adam, Jean-Marie, Dr., F-68300 Rosenau (FR); Jordine, Guido, Dr., D-79098 Freiburg (DE)

(56) Entgegenhaltungen:
- EP-A- 0 073 481
- EP-A- 0 559 617

## Beschreibung

Die vorliegende Anmeldung betrifft faserreaktive Farbstoffe, deren Herstellung sowie Verwendung zum Färben von Fasermaterialien aus wässrigem Bad oder zum Bedrucken von Fasermaterialien.

Gegenstand der vorliegenden Erfindung sind somit Verbindungen der Formel 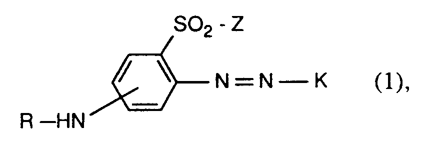 worin
K den Rest einer Kupplungskomponente der Benzol- oder Naphthalinreihe oder der heterocyclischen Reihe bedeutet;
R einen Rest -C(O)-CH₂-X, -C(O)-C(X)=CH₂, -C(O)-CH(X)-CH₂-X, -C(O)-CH=CH₂ oder -C(O)-C(CH₃)=CH₂ darstellt;
X Halogen bedeutet;
Z für Vinyl oder einen Rest -CH₂-CH₂-Y steht; und
Y -OSO₃H, -SSO₃H, -OPO(OH)₂, -OCOCH₃, -Cl oder einen Rest der Formel 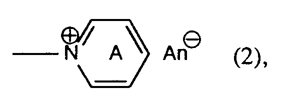 worin der Ring A gegebenenfalls durch Carboxyl oder Carbamoyl substituiert ist und An^{⊖} ein Anion ist, bedeutet.

Die den Verbindungen der Formel (1) zugrunde liegenden Kupplungskomponenten K-H sind an sich bekannt und in grosser Zahl beschrieben z.B. in Venkataraman "The Chemistry of Synthetic Dyes" Band 6, Seiten 213-297, Academic Press, New York, London 1972.

K steht vorzugsweise für den Rest einer Benzol-, Naphthalin-, Pyrazolon-, Aminopyrazol-, Pyridon-, Pyrimidin-, Indol-, Naphthylimidazol-, Diphenylamin-, Pyrazolo[2,3-a]pyrimidin-, Tetrahydrochinolin- oder Acetessigsäureamid-Kupplungskomponente, wobei die oben genannten Reste weitersubstituiert sein können.

Geeignete Substituenten am Rest K sind z.B.: C₁-C₆-Alkyl wie Methyl, Ethyl, n-oder iso-Propyl, n-, iso-, sec.- oder tert.-Butyl oder geradkettiges oder verzweigtes Pentyl oder Hexyl; C₁-C₄-Alkoxy, worunter generell Methoxy, Ethoxy, n- oder iso-Propoxy und n-, iso-, sec.- oder tert.-Butoxy zu verstehen ist; Phenoxy; gegebenenfalls durch Hydroxy substituiertes C₂-C₆-Alkanoylamino, z.B. Acetylamino, Hydroxyacetylamino oder Propionylamino; Benzoylamino; Amino; gegebenenfalls im Alkylteil z.B. durch Hydroxy, C₁-C₄-Alkoxy, Carboxy, Cyano, Halogen, Sulfo, Sulfato, Phenyl oder Sulfophenyl substituiertes N-C₁-C₄-Alkyl- oder N,N-Di-C₁-C₄-Alkylamino, z.B. Methylamino, Ethylamino, N,N-Dimethylamino, N,N-Diethylamino, Cyanoethylamino, Hydroxyethylamino, N,N-Dihydroxyethylamino, Sulfoethylamino, 3-Sulfo-n-propylamino, Sulfatoethylamino, N-Ethyl-N-(3-Sulfobenzyl)-amino oder N-(3-Sulfoethyl)-N-benzylamino; Cyclohexylamino; gegebenenfalls im Phenylteil durch C₁-C₄-Alkyl, C₁-C₄-Alkoxy, Halogen oder Sulfo substituiertes N-Phenylamino oder N-C₁-C₄-Alkyl-N-phenylamino; C₂-C₄-Alkoxycarbonyl, z.B. Methoxy- oder Ethoxycarbonyl; Trifluoromethyl; Nitro; Cyano; Halogen, wie Fluor, Brom und insbesondere Chlor; Ureido; Hydroxy; Carboxy; Sulfo; Sulfomethyl; Carbamoyl; Sulfamoyl; gegebenenfalls im Phenylteil durch Sulfo oder Carboxy substituiertes N-Phenyl- oder N-C₁-C₄-Alkyl-N-phenylsulfamoyl, z.B. N-(3-Sulfophenyl)-sulfamoyl, N-(2-Carboxyphenyl)-sulfamoyl, N-Methyl- oder N-Ethyl-N-phenylsulfamoyl oder N-Methyl- oder N-Ethyl-N-(3-Sulfophenyl)-sulfamoyl; Methylsulfonyl; ein Reaktivrest -NHR oder -NH-C(O)-C₆H₅-R, worin R jeweils die oben angegebene Bedeutung hat; und gegebenenfalls z.B. durch C₁-C₄-Alkyl, C₁-C₄-Alkoxy, Halogen, Sulfo, Amino, N-C₁-C₄-Alkyl- oder N,N-Di-C₁-C₄-Alkylamino oder Phenylamino substituiertes Phenylazo oder Naphthylazo.

Bevorzugte Bedeutungen von K sind: Ein Phenyl- oder Naphthylrest, der einen oder mehrere Substituenten aus der Gruppe Hydroxy, C₁-C₄-Alkoxy, Amino, N-C₁-C₄-Alkyl-oder N,N-Di-C₁-C₄-Alkylamino, Acetylamino, Benzoylamino, C₁-C₄-Alkyl, gegebenenfalls im Phenylteil durch Carboxy oder Sulfo substituiertes N-Phenylsulfamoyl oder N-C₁-C₄-Alkyl-N-phenylsulfamoyl, gegebenenfalls durch Sulfo substituiertes N-C₁-C₄-Alkyl-N-benzylamino, gegebenenfalls z.B. durch C₁-C₄-Alkyl, C₁-C₄-Alkoxy, Halogen, Sulfo, Amino, N-C₁-C₄-Alkyl- oder N,N-Di-C₁-C₄-Alkylamino oder Phenylamino substituiertes Phenylazo oder Naphthylazo und Reaktivrest -NHR oder -NH-C(O)-C₆H₅-R, worin R die zuvor angegebene Bedeutung hat, trägt; ein unsubstituierter oder durch C₁-C₄-Alkyl, C₁-C₄-Alkoxy, Sulfo und/oder Halogen substituierter 1-Phenylpyrazol-5-on- oder 1-Phenyl-5-aminopyrazolrest; ein unsubstituierter oder durch C₁-C₄-Alkyl, C₁-C₄-Alkoxy, Sulfo und/oder Halogen substituierter Indolrest; und ein unsubstituierter oder durch C₁-C₆-Alkyl, Sulfo, Hydroxy oder Phenylamino, welches seinerseits durch C₁-C₄-Alkyl, C₁-C₄-Alkoxy, Halogen oder Sulfo substituiert sein kann, substituierter Naphthylimidazolrest.

Bei X als Halogen handelt es sich vorzugsweise um Brom oder Chlor und insbesondere bevorzugt um Brom.

Bevorzugte Reste R sind Acryloyl; Methacryloyl; Chloracetyl; Bromacetyl; α-Chlor- und α-Bromacryloyl, d.h. ein Rest der Formel -C(O)-CCl=CH₂ oder -C(O)-CBr=CH₂; und α,β-Dichlor- und α,β-Dibrompropionyl, d.h. ein Rest der Formel -C(O)-CHCl-CH₂Cl oder -C(O)-CHBr-CH₂Br.

R steht besonders bevorzugt für α-Bromacryloyl oder α,β-Dibrompropionyl.

Bedeutet Y einen Rest der Formel (2), handelt es sich bei dem Pyridinium-Kation vorzugsweise um das 4-Carboxy- oder 4-Carbamoylpyridinium-Kation. Als Anion An^{⊖} kommen alle üblichen Anionen, z.B. das Chloridion, in Frage.

Y steht vorzugsweise für den Rest -OSO₃H, -SSO₃H oder -OPO(OH)₂ und insbesondere bevorzugt für den Rest -OSO₃H.

Dementsprechend bedeutet Z vorzugsweise Vinyl, β-Sulfatoethyl, β-Thiosulfatoethyl oder β-Phosphatoethyl und besonders bevorzugt Vinyl oder β-Sulfatoethyl.

Die Verbindungen der Formel (1) weisen z.B. 1 bis 3, vorzugsweise 2 oder 3 und besonders bevorzugt 2, wasserlöslichmachende Gruppen auf. Bevorzugt als löslichmachende Gruppen sind die Sulfo- und Sulfatogruppe; der Begriff Sulfogruppe umfasst hierbei sowohl die freie Säure als auch vorzugsweise deren Salz. Geeignete Salze sind z.B. Alkali-, Erdalkali- oder Ammoniumsalze oder die Salze organischer Amine, z.B. Natrium-, Kalium-, Lithium- oder Ammoniumsalze oder das Salz des Triethanolamins.

Eine bevorzugte Ausführungsform der vorliegenden Erfindung betrifft Verbindungen der Formel (1), worin K eine oder zwei Sulfogruppen trägt und gegebenenfalls durch andere Reste weitersubstituiert ist und Z β-Sulfatoethyl bedeutet.

Eine weitere bevorzugte Ausführungsform der vorliegenden Erfindung betrifft Verbindungen der zuvor genannten Formel (1), worin
K den Rest einer Benzol-, Naphthalin-, Pyrazolon-, Aminopyrazol-, Pyridon-, Pyrimidin-, Indol-, Naphthylimidazol-, Diphenylamin-, Pyrazolo[2,3-a]pyrimidin-, Tetrahydrochinolin- oder Acetessigsäureamid-Kupplungskomponente bedeutet, der jeweils unsubstituiert oder durch C₁-C₆-Alkyl, C₁-C₄-Alkoxy, Phenoxy, gegebenenfalls durch Hydroxy substituiertes C₂-C₆-Alkanoylamino, Benzoylamino, Amino, gegebenenfalls im Alkylteil durch Hydroxy, C₁-C₄-Alkoxy, Carboxy, Cyano, Halogen, Sulfo, Sulfato, Phenyl oder Sulfophenyl substituiertes N-C₁-C₄-Alkyl- oder N,N-Di-C₁-C₄-Alkylamino, Cyclohexylamino, gegebenenfalls im Phenylteil durch C₁-C₄-Alkyl, C₁-C₄-Alkoxy, Halogen oder Sulfo substituiertes N-Phenylamino oder N-C₁-C₄-Alkyl-N-phenylamino, C₂-C₄-Alkoxycarbonyl, Trifluoromethyl, Nitro, Cyano, Halogen, Ureido, Hydroxy, Carboxy, Sulfo, Sulfomethyl, Carbamoyl, Sulfamoyl, gegebenenfalls im Phenylteil durch Sulfo oder Carboxy substituiertes N-Phenyl- oder N-C₁-C₄-Alkyl-N-phenylsulfamoyl, Methylsulfonyl, einen Reaktivrest -NHR oder -NH-C(O)-C₆H₅-R, und/oder durch unsubstituiertes oder durch C₁-C₄-Alkyl, C₁-C₄-Alkoxy, Halogen, Sulfo, Amino, N-C₁-C₄-Alkyl- oder N,N-Di-C₁-C₄-Alkylamino oder Phenylamino substituiertes Phenylazo oder Naphthylazo substituiert ist,
R Acryloyl, Methacryloyl, Chloracetyl, Bromacetyl, α-Chlor- oder α-Bromacryloyl oder α,β-Dichlor- oder α,β-Dibrompropionyl bedeutet, und
Z für Vinyl, β-Sulfatoethyl, β-Thiosulfatoethyl oder β-Phosphatoethyl steht.

Eine besonders bevorzugte Ausführungsform der vorliegenden Erfindung betrifft Verbindungen der Formel 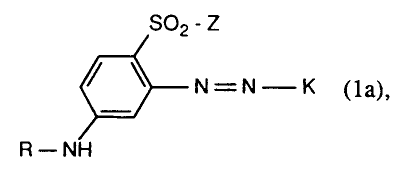 worin für K, R und Z jeweils die zuvor angegebenen Bedeutungen und Bevorzugungen gelten.

Eine insbesondere bevorzugte Ausführungsform der vorliegenden Erfindung betrifft Verbindungen der oben angegebenen Formel (1a), worin
K einen Phenyl- oder Naphthylrest, der einen oder mehrere Substituenten aus der Gruppe Hydroxy, C₁-C₄-Alkoxy, Amino, N-C₁-C₄-Alkyl- oder N,N-Di-C₁-C₄-Alkylamino, Acetylamino, Benzoylamino, C₁-C₄-Alkyl, gegebenenfalls im Phenylteil durch Carboxy oder Sulfo substituiertes N-Phenylsulfamoyl oder N-C₁-C₄-Alkyl-N-phenylsulfamoyl, gegebenenfalls durch Sulfo substituiertes N-C₁-C₄-Alkyl-N-benzylamino, gegebenenfalls durch C₁-C₄-Alkyl, C₁-C₄-Alkoxy, Halogen, Sulfo, Amino, N-C₁-C₄-Alkyl- oder N,N-Di-C₁-C₄-Alkylamino oder Phenylamino substituiertes Phenylazo oder Naphthylazo, und Reaktivrest -NHR oder -NH-C(O)-C₆H₅-R trägt; einen unsubstituierten oder durch C₁-C₄-Alkyl, C₁-C₄-Alkoxy, Sulfo und/oder Halogen substituierten 1-Phenylpyrazol-5-on- oder 1-Phenyl-5-aminopyrazolrest; einen unsubstituierten oder durch C₁-C₄-Alkyl, C₁-C₄-Alkoxy, Sulfo und/oder Halogen substituierten Indolrest; oder einen unsubstituierten oder durch C₁-C₆-Alkyl, Sulfo, Hydroxy und/oder Phenylamino, welches seinerseits durch C₁-C₄-Alkyl, C₁-C₄-Alkoxy, Halogen oder Sulfo substituiert sein kann, substituierten Naphthylimidazolrest bedeutet,
R für α-Bromacryloyl oder α,β-Dibrompropionyl steht, und
Z Vinyl oder β-Sulfatoethyl ist.

Die Verbindungen der Formeln (1) und (1a) können in an sich bekannter Weise erhalten werden, z.B. indem man eine Verbindung der Formel 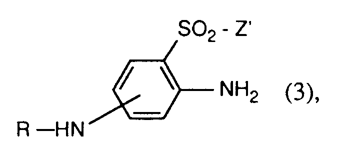 worin R die zuvor angegebene Bedeutung hat und Z' unabhängig die zuvor für Z angegebene Bedeutung hat oder für 2-Hydroxyethyl steht, in üblicher Weise diazotiert, die erhaltene Diazoniumverbindung mit einer Kupplungskomponente der Formel

K - H (4),

worin K die zuvor angegebene Bedeutung hat, kuppelt, und wenn Z' 2-Hydroxyethyl ist, den Rest -SO₂Z' in einen beliebigen Rest -SO₂Z umwandelt.

Die Verbindungen der Formeln 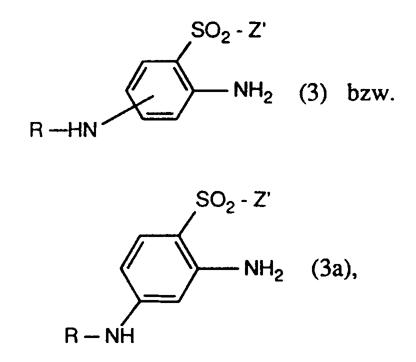 worin für R und Z' die zuvor angegebenen Bedeutungen und Bevorzugungen gelten, sind neu und stellen einen weiteren Gegenstand der Erfindung dar. Sie können hergestellt werden, z.B. indem man eine Verbindung der Formel 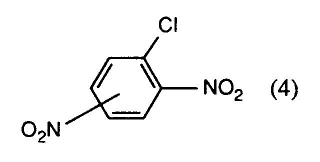 zunächst mit 2-Mercaptoethanol umsetzt, die erhaltene Verbindung zur Sulfonylverbindung der Formel 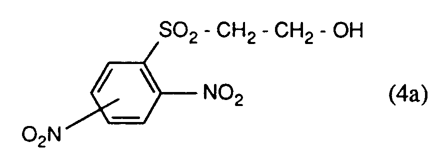 oxidiert, eine geeignete Abgangsgruppe Z einführt, die beiden Nitrogruppen zu Aminogruppen reduziert und schliesslich eine der Aminogruppen selektiv mit einer Verbindung der Formel

R - Hal (4b),

worin Hal für Halogen, bevorzugt Chlor, steht und R die zuvor angegebene Bedeutung hat, acyliert.

Die Umsetzung der bekannten Verbindungen der Formel (4) mit 2-Mercaptoethanol wird zum Beispiel in einem geeigneten Lösungsmittel in Gegenwart von Kaliumfluorid bei erhöhter Temperatur, z.B. bei 50-100°C, durchgeführt. Als Lösungsmittel kommen hierbei z.B. Wasser, niedere Alkohole, Dioxan, Toluol, Xylole, Mono- oder Dichlorbenzol, N,N-Dimethylformamid oder N-Methylpyrrolidon in Frage.

Die Oxidation der Thioetherverbindungen zu Sulfonen kann nach verschiedenen Methoden erfolgen, z.B. mit Wasserstoffperoxid mit oder ohne Zusatz von geeigneten Katalysatoren wie z.B. Wolfram- oder Vanadinverbindungen, ferner mit Peressigsäure, Kaliumpermanganat oder Chromsäure, oder mit Chlor/Salzsäure je in wässrigem, wässrig-organischem oder organischem Medium.

Die Ueberführung des Hydroxyethylsulfonylrestes in einen geeigneten Reaktivrest, z.B. in einen Sulfatoethylsulfonyl-, Thiosulfatoethylsulfonyl, Phosphatoethylsulfonyl-oder Vinylsulfonylrest erfolgt nach üblichen an sich bekannten Methoden.

Die Reduktion der Nitrogruppen erfolgt ebenfalls in an sich bekannter Weise, z.B. durch katalytische Hydrierung mit Pd/Kohlenstoff in Ethanol, Essigester oder Tetrahydrofuran bei Raumtemperatur bis etwa 40°C, oder auch mit Fe/Salzsäure oder Fe/Essigsäure in wässriger Lösung.

Die Umsetzung des Amins mit dem Säurehalogenid erfolgt vorteilhaft in wässrigem, wässrig-organischem oder organischem Medium bei Temperaturen von 0-20°C in Gegenwart von alkalischen säurebindenden Mitteln, z.B. Alkalimetallhydroxiden, -carbonaten oder -bicarbonaten. Der Reduktions- und Acylierungsschritt können gegebenenfalls im Eintopfverfahren ohne Zwischenisolierung des Amins durchgeführt werden.

Die Kupplungskomponenten der Formel (4) sind bekannt oder können nach an sich bekannten Methoden erhalten werden.

Die Umsetzung der Amine der Formel (3) mit den Kupplungskomponenten der Formel (4) zu Azofarbstoffen erfolgt ebenfalls nach bekannten Methoden durch Diazotierung und Kupplung.

Die erfindungsgemässen Farbstoffe der Formel (1) sind faserreaktiv. Unter faserreaktiven Farbstoffen sind solche zu verstehen, die mit den Hydroxylgruppen der Cellulose oder mit den reaktiven Zentren von natürlichen und synthetischen Polyamiden unter Bildung kovalenter chemischer Bindungen zu reagieren vermögen.

Die Farbstoffe der Formel (1) eignen sich zum Färben und Bedrucken der verschiedensten Fasermaterialien, insbesondere textiler Fasermaterialien, wie z.B. Seide, Fasermaterialien aus Cellulose und insbesondere Wolle, synthetische Fasermaterialien, wie z.B. Polyamid-6 und Polyamid-6.6 und Leder. Diese Materialien können in den verschiedensten Verarbeitungszuständen vorliegen, z.B. als Garn, Gewebe, Vlies oder Gewirk. Man erhält egale Färbungen mit guten Allgemeinechtheiten, z.B. Licht- und Nassechtheiten.

Die Mengen, in denen die Farbstoffe der Formel (1) in den Färbebädern oder Druckpasten verwendet werden, können je nach der gewünschten Farbtiefe in weiten Grenzen schwanken; im allgemeinen haben sich Mengen von 0,01 bis 10 Gew.-%, insbesondere 2 bis 10 Gew.-%, bezogen auf das Farbegut bzw. die Druckpaste, als vorteilhaft erwiesen.

Vorzugsweise werden die Verbindungen der Formel (1) zum Färben von Fasermaterialien aus natürlichen Polyamiden, insbesondere Wolle, verwendet. Es können dabei die üblichen Färbe- und Druckapparate und -maschinen, beispielsweise für Flocke, Kammzug, Stranggarn, Wickelkörper, Stückware und Teppiche, verwendet werden.

Die wässrigen Färbebäder können neben dem Reaktivfarbstoff noch Hilfsmittel, insbesondere Egalisierhilfsmittel, enthalten. Die Egalisierhilfsmittel werden vorteilhaft in einer Menge von 0,3 bis 3 Gew.-%, bezogen auf das Fasermaterial, verwendet.

Als weitere Hilfsmittel können die Färbebäder Mineralsäuren, wie Schwefelsäure, Sulfaminsäure oder Phosphorsäure, organische Säuren, zweckmässig niedere aliphatische Carbonsäuren wie Ameisensäure, Essigsäure oder Maleinsäure, enthalten. Die Säuren dienen vor allem der Einstellung des pH-Werts der verwendeten Flotten. Die Einstellung von pH-Werten von 3 bis 6 erfolgt vorzugsweise mit einer organischen Säure, insbesondere mit Ameisensäure oder Essigsäure.

Vorzugsweise färbt man bei einem pH-Wert von 4 bis 6, insbesondere 4,2 bis 5,5.

Ferner kann die Färbeflotte verschiedene Salze, insbesondere Ammoniumsalze oder Alkalisalze, wie z.B. Ammoniumsulfat oder Natriumsulfat als Hilfsmittel enthalten.

Das Flottenverhältnis kann innerhalb eines weiten Bereichs gewählt werden, z.B. von 1:6 bis 1:80, vorzugsweise von 1:10 bis 1:50.

Das Färben erfolgt aus wässriger Flotte nach dem Ausziehverfahren z.B. bei einer Temperatur zwischen 80 und 105°C bzw. 110°C bei Verwendung geeigneter Wollschutzmittel, vorzugsweise bei einer Temperatur zwischen 98 und 103°C.

Die Färbedauer beträgt in der Regel 30 bis 90 Minuten.

Die Farbstoffe der Formel (1) weisen einen sehr hohen Fixiergrad z.B. auf Wolle auf; dementsprechend kann eine alkalische Nachbehandlung z.B. mit Ammoniak zur Verbesserung der Nassechtheiten entfallen.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

### Herstellung der Diazokomponenten

Beispiel 1: In eine Lösung von 500 Teilen 2,4-Dinitro-1-chlorbenzol in 590 Teilen N,N-Dimethylformamid (DMF) werden 217 Teile Kaliumfluorid eingetragen und das Reaktionsgemisch 5 Stunden bei Raumtemperatur gerührt. Anschliessend tropft man 350 Teile 2-Mercaptoethanol zu, wobei die Innentemperatur auf 60-65°C ansteigt, und rührt anschliessend ca. 15 Stunden bei dieser Temperatur. Danach noch vorhandene Edukte werden durch Zugabe von 34 Teilen Kaliumcarbonat zur Reaktion gebracht. Am Schluss lässt man auf Raumtemperatur abkühlen, filtriert Salze ab und engt das Filtrat ein. Das ölige Rohprodukt wird auf Wasser ausgetragen, wobei ein gelber, kristalliner Niederschlag ausfällt. Nach dem Absaugen, Waschen und Trocknen erhält man 2-[2,4-Dinitrophenylsulfanyl]-ethanol in nahezu quantitativer Ausbeute und hoher Reinheit.

Beispiel 2: In eine Lösung von 140 Teilen 2-[2,4-Dinitrophenylsulfanyl]-ethanol in 1100 Teilen Methanol wird eine Suspension von 220 Teilen Oxone® in 150 Teilen Wasser eingetragen und das Reaktionsgemisch ca. 1 Stunde unter Rückfluss erhitzt und dabei gerührt. Anschliessend gibt man 3,5 Teile in wenig Wasser gelöstes Ammoniumheptamolybdat, sowie 30 Teile 30%iges Wasserstoffperoxid zu und rührt bis zum vollständigen Umsatz unter Rückfluss. Nach beendeter Reaktion versetzt man mit gesättigter Natriumdisulfit-Lösung, bis kein Peroxid mehr nachweisbar ist, kühlt auf 0-5°C ab, filtriert Salze ab und engt das Filtrat ein. Das auskristallisierende Produkt wird abgesaugt, gewaschen und getrocknet. Man erhält 2-[2,4-Dinitrophenylsulfonyl]-ethanol in guter Ausbeute.

Beispiel 3: 105 Teile 2-[2,4-Dinitrophenylsulfonyl]-ethanol werden bei 0-5°C langsam in 380 Teile Schwefelsäure-Monohydrat eingetragen und 14 Stunden bei dieser Temperatur gerührt. Die erhaltene braune Lösung wird dann langsam auf ein Eis und 20%ige Natriumchloridlösung enthaltendes Gemisch ausgetragen, wobei eine gelbliche Suspension entsteht. Der Niederschlag wird abfiltriert, zunächst mit 1000 Teilen kalter 20%ige Natriumchloridlösung und dann mit 200 Teilen Eiswasser gewaschen. Nach dem Trocknen erhält man 2-[2,4-Dinitrophenylsulfönyl]-ethyl-hydrogensulfat in sehr guter Ausbeute und Reinheit.

Beispiel 4: Zu einer Suspension von 180 Teilen Eisen in 500 Teilen Wasser werden bei 80°C 19 Teile Essigsäure gegeben und 5 Minuten gerührt. Anschliessend kühlt man auf 60°C ab und trägt langsam 150 Teile 2-[2,4-Dinitrophenylsulfonyl]-ethyl-hydrogensulfat ein. Nach 30 Minuten wird das Reaktionsgemisch auf 0-5°C abgekühlt und die unlöslichen Bestandteile abfiltriert.

In das Filtrat werden bei 0-5°C unter starkem Rühren 118 Teile α,β-Dibrompropionylchlorid eingetropft und dabei der pH-Wert der Lösung durch Zugabe von 2N Natriumhydroxidlösung bei ca. 5 gehalten. Nach beendeter Reaktion werden 10 Vol-% Natriumchlorid zugegeben, dann das Produkt abgesaugt, gewaschen und getrocknet. Man erhält die Verbindung der Formel 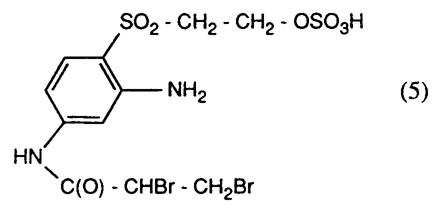 in guter Ausbeute und Reinheit.

Beispiel 4a: Analog wie im Beispiel 4 beschrieben lässt sich die Verbindung der Formel 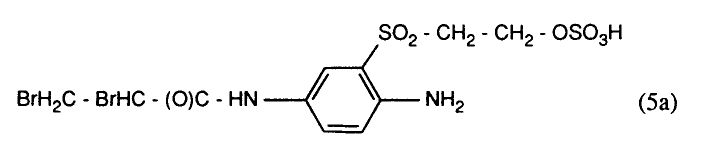 herstellen.

### Herstellung der Farbstoffe

Beispiel 5: 10 Teile der Verbindung der Formel (5) gemäss Beispiel 4 werden bei 0-5°C in 60 Teilen Wasser suspendiert und dann 13 Teile 1,7 molare Naphthalin-1-sulfonsäure-Lösung sowie 3,9 Teile 4N Natriumnitrit-Lösung langsam zugegeben. Nach 30 Minuten wird der Nitritüberschuss mit Sulfaminsäure zerstört. 3,7 Teile 3-Methyl-1-(3-sulfophenyl)-5-pyrazolimin suspendiert in wenig Wasser werden zur Diazo-Lösung gegeben und bei pH 2 gekuppelt. Nach beendeter Reaktion stellt man auf pH 5 und salzt das Produkt aus. Die Isolierung des Produkts kann auch durch Gefriertrocknung erfolgen. Man erhält nach Abfiltration, Waschen und Trocknen das Produkt der Formel 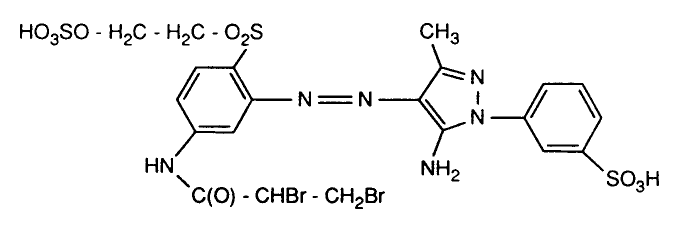 in guter Ausbeute und Reinheit. Der Farbstoff färbt Wolle in einem brillanten Gelb mit hoher Fixierung und guten Nass- und Lichtechtheiten.

Beispiel 5a: Verfährt man wie im Beispiel 5 beschrieben und verwendet anstelle der Verbindung der Formel (5) die analoge Menge der Verbindung der Formel (5a), so erhält man die Verbindung der Formel 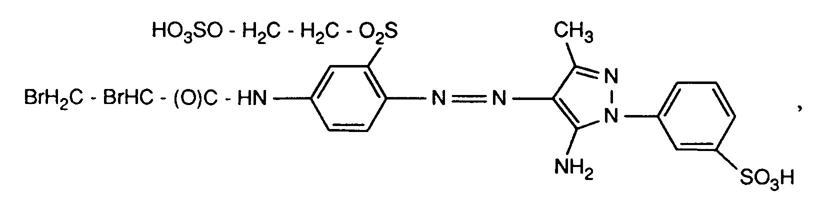 die Wolle in einem brillantem Gelb mit vergleichbar guten Allgemeinechtheiten farbt.

Beispiel 5b: Verfährt man wie im Beispiel 5a beschrieben und verwendet anstelle von 3,7 Teilen 3-Methyl-1-(3-sulfophenyl)-5-pyrazolimin als Kupplungskomponente die äquivalente Menge 1-Ethyl-3-sulfomethyl-4-methyl-6-hydroxypyridon-(2), so erhält man die Verbindung der Formel 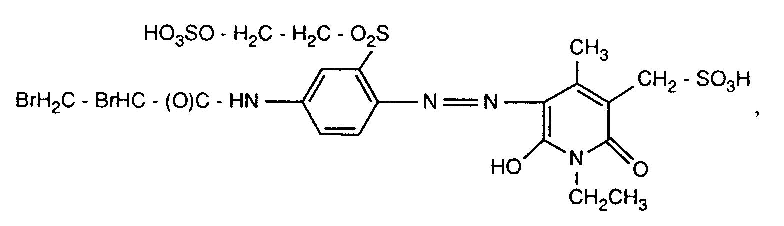 welche Wolle in einer gelb-orangen Nuance mit ähnlich guten Allgemeinechtheiten färbt.

Beispiele 6-29: Verfährt man wie im Beispiel 5 beschrieben und verwendet anstelle von 3-Methyl- 1 -(3-sulfophenyl)-5-pyrazolimin die äquivalente Menge der in der Tabelle angegebenen Kupplungskomponenten, erhält man analoge Farbstoffe, die jeweils Wolle mit guten Allgemeinechtheiten färben.

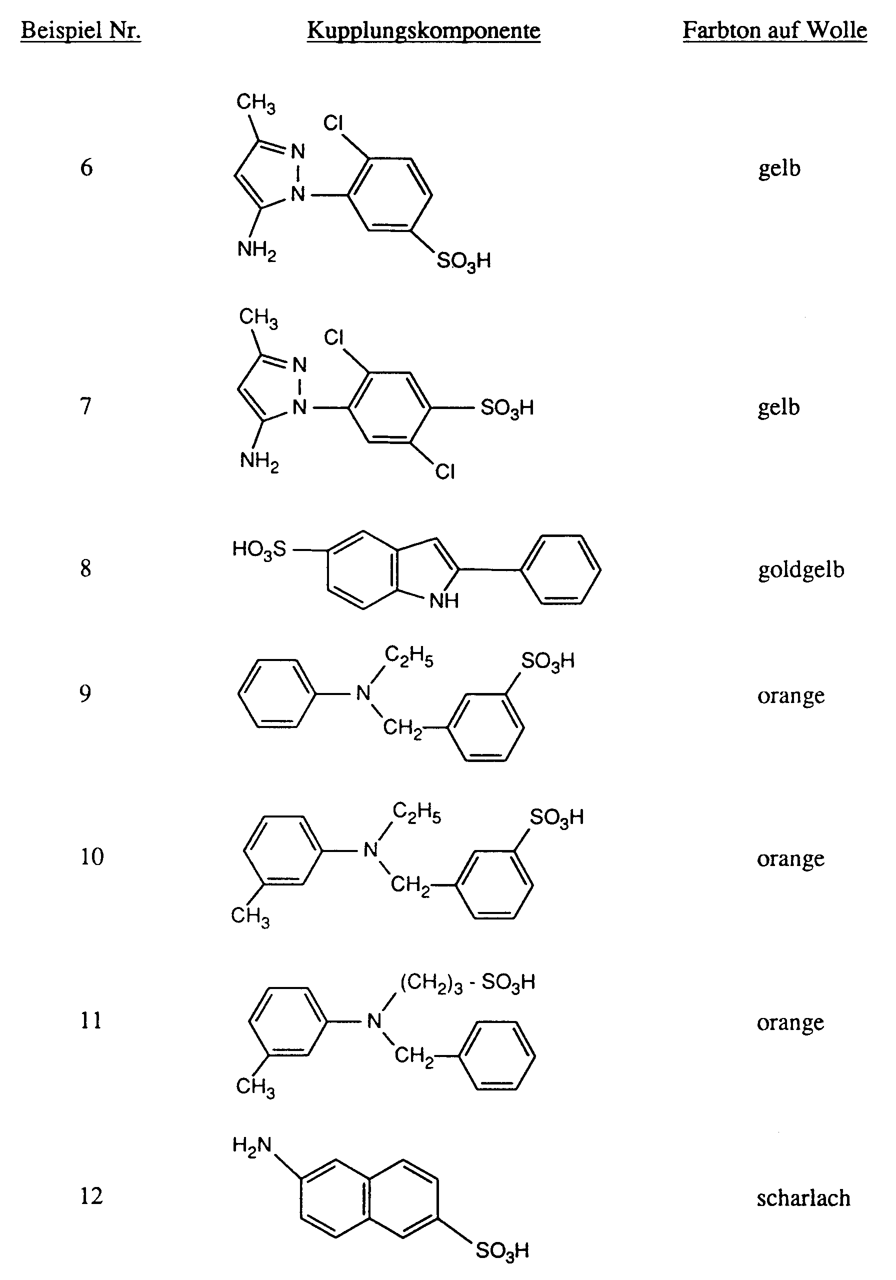

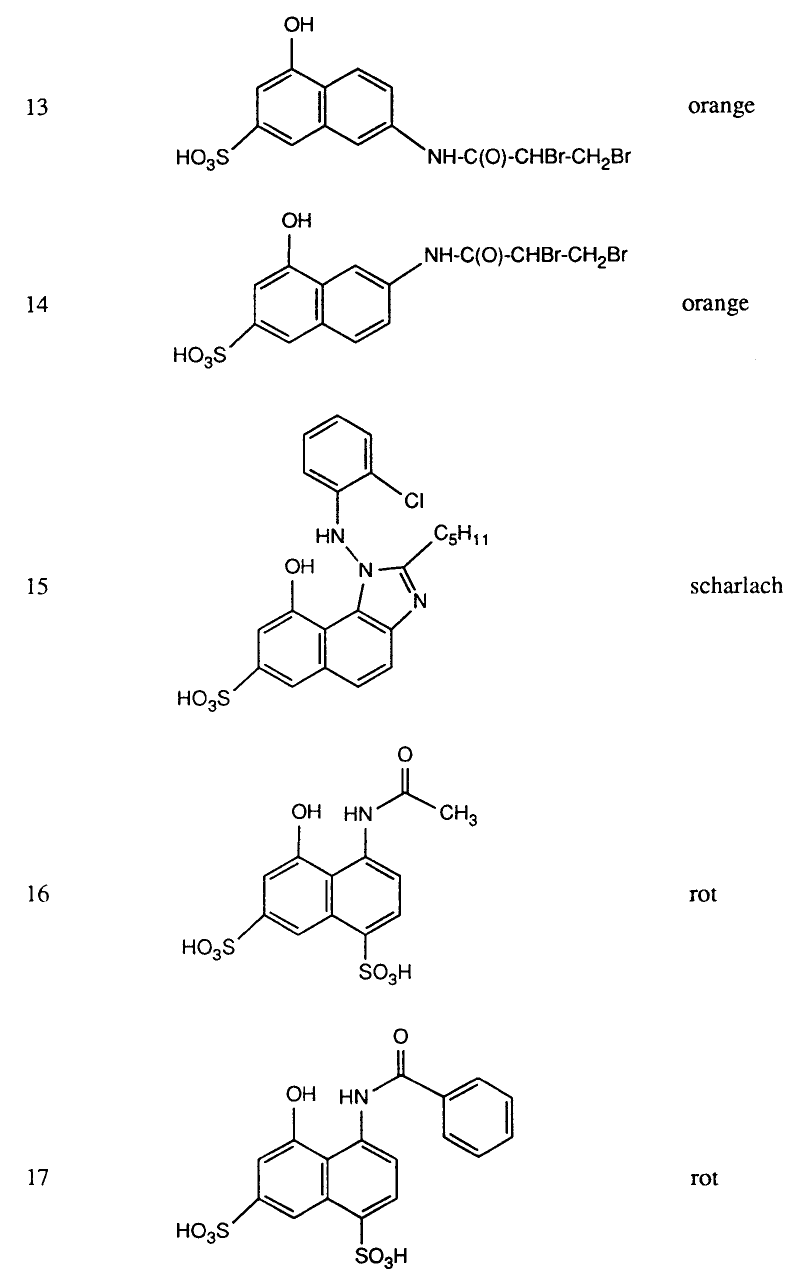

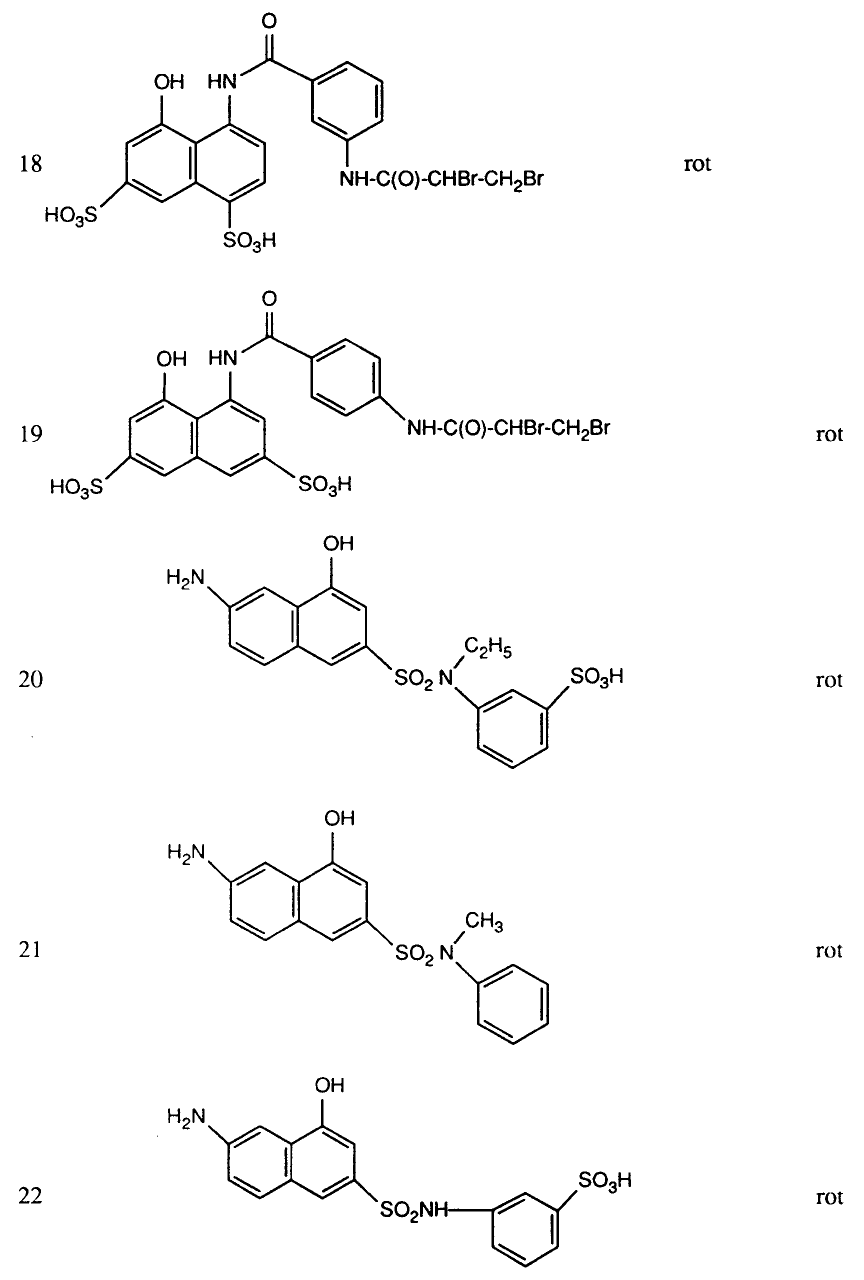

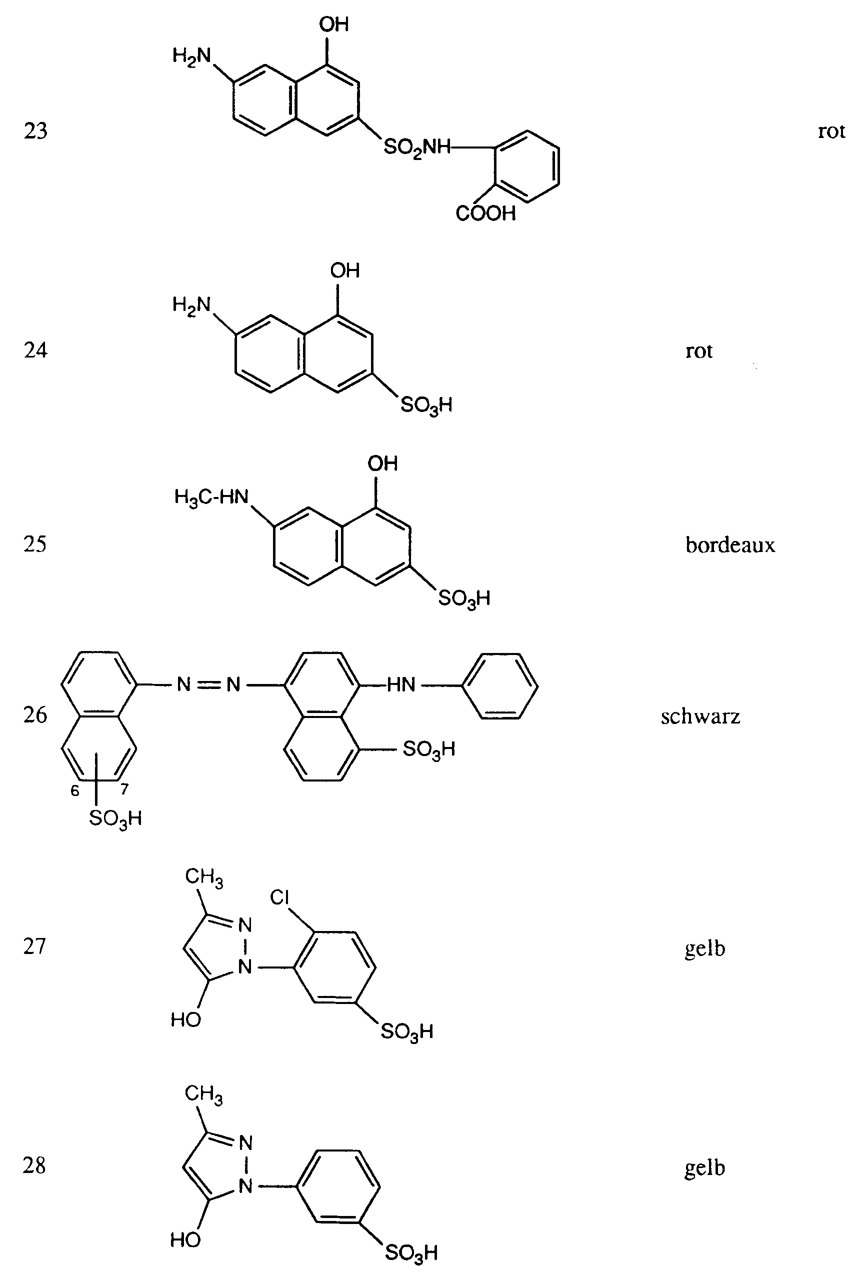

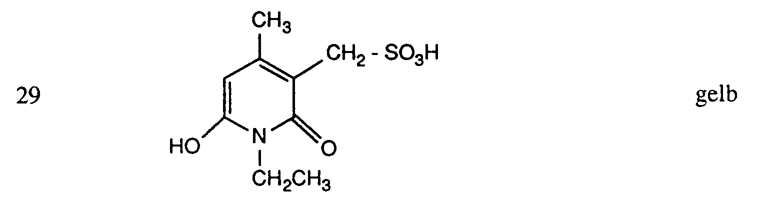

Färbebeispiel: 0,1 Teile Farbstoff gemäss Beispiel 5 werden in 200 Teilen entmineralisiertem Wasser gelöst und 0,5 Teile Glaubersalz, 0,1 Teile eines Egalisiermittels sowie 0,5 Teile Natriumacetat zugegeben. Dann wird mit 80%iger Essigsäure auf pH 5,5 eingestellt. Das Färbebad wird 10 Minuten auf 50°C erwärmt und dann 10 Teile eines Wollgewebes zugegeben. Man erwärmt innerhalb von ca. 50 Minuten auf 100°C und farbt 60 Minuten bei dieser Temperatur. Danach lässt man auf 90°C abkühlen und entnimmt das Färbegut. Das Wollgewebe wird mit warmem und kaltem Wasser gespült, anschliessend geschleudert und getrocknet. Es wird eine brillante gelbe Färbung erhalten , die sehr gute Licht- und Nassechtheiten aufweist.

## Patentansprüche

1. Verbindungen der Formel 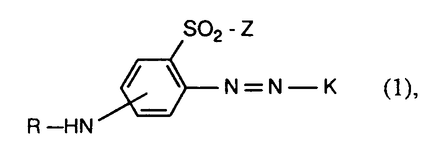 worin
K den Rest einer Kupplungskomponente der Benzol- oder Naphthalinreihe oder der heterocyclischen Reihe bedeutet;
R einen Rest -C(O)-CH₂-X, -C(O)-C(X)=CH₂, -C(O)-CH(X)-CH₂-X, -C(O)-CH=CH₂ oder -C(O)-C(CH₃)=CH₂ darstellt;
X Halogen bedeutet;
Z für Vinyl oder einen Rest -CH₂-CH₂-Y steht; und
Y -OSO₃H, -SSO₃H, -OPO(OH)₂, -OCOCH₃, -Cl oder einen Rest 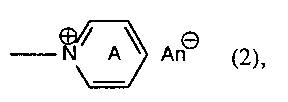 worin der Ring A gegebenenfalls durch Carboxyl oder Carbamoyl substituiert ist und An^{⊖} ein Anion ist, bedeutet.

2. Verbindungen gemäss Anspruch 1 der Formel 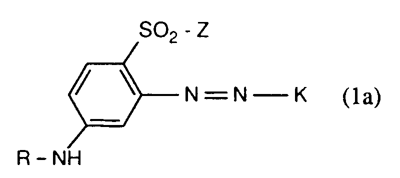 worin K, R und Z jeweils die im Anspruch 1 angegebene Bedeutung haben.

3. Verbindungen gemäss Anspruch 1 oder 2, dadurch gekennzeichnet, dass K den Rest einer Benzol-, Naphthalin-, Pyrazolon-, Aminopyrazol-, Pyridon-, Pyrimidin-, Indol-, Naphthylimidazol-, Diphenylamin-, Pyrazolo[2,3-a]pyrimidin-, Tetrahydrochinolin-oder Acetessigsäureamid-Kupplungskomponente bedeutet.

4. Verbindungen gemäss einem der Ansprüche 1 bis 3, dadurch gekennzeichnet, dass die Kupplungskomponente K unsubstituiert oder durch C₁-C₆-Alkyl, C₁-C₄-Alkoxy, Phenoxy, gegebenenfalls durch Hydroxy substituiertes C₂-C₆-Alkanoylamino, Benzoylamino, Amino, gegebenenfalls im Alkylteil durch Hydroxy, C₁-C₄-Alkoxy, Carboxy, Cyano, Halogen, Sulfo, Sulfato, Phenyl oder Sulfophenyl substituiertes N-C₁-C₄-Alkyl- oder N,N-Di-C₁-C₄-Alkylamino, Cyclohexylamino, gegebenenfalls im Phenylteil durch C₁-C₄-Alkyl, C₁-C₄-Alkoxy, Halogen oder Sulfo substituiertes N-Phenylamino oder N-C₁-C₄-Alkyl-N-phenylamino, C₂-C₄-Alkoxycarbonyl, Trifluoromethyl, Nitro, Cyano, Halogen, Ureido, Hydroxy, Carboxy, Sulfo, Sulfomethyl, Carbamoyl, Sulfamoyl, gegebenenfalls im Phenylteil durch Sulfo oder Carboxy substituiertes N-Phenyl- oder N-C₁-C₄-Alkyl-N-phenylsulfamoyl, Methylsulfonyl, einen Reaktivrest - NHR oder -NH-C(O)-C₆H₅-R, worin R jeweils die im Anspruch 1 angegebene Bedeutung hat, und/oder durch unsubstituiertes oder durch C₁-C₄-Alkyl, C₁-C₄-Alkoxy, Halogen, Sulfo, Amino, N-C₁-C₄-Alkyl- oder N,N-Di-C₁-C₄-Alkylamino oder Phenylamino substituiertes Phenylazo oder Naphthylazo substituiert ist.

5. Verbindungen gemäss einem der Ansprüche 1 bis 4, dadurch gekennzeichnet, dass K einen Phenyl- oder Naphthylrest, der einen oder mehrere Substituenten aus der Gruppe Hydroxy, C₁-C₄-Alkoxy, Amino, N-C₁-C₄-Alkyl- oder N,N-Di-C₁-C₄-Alkylamino, Acetylamino, Benzoylamino, C₁-C₄-Alkyl, gegebenenfalls im Phenylteil durch Carboxy oder Sulfo substituiertes N-Phenylsulfamoyl oder N-C₁-C₄-Alkyl-N-phenylsulfamoyl, gegebenenfalls durch Sulfo substituiertes N-C₁-C₄-Alkyl-N-benzylamino, gegebenenfalls durch C₁-C₄-Alkyl, C₁-C₄-Alkoxy, Halogen, Sulfo, Amino, N-C₁-C₄-Alkyl- oder N,N-Di-C₁-C₄-Alkylamino oder Phenylamino substituiertes Phenylazo oder Naphthylazo und Reaktivrest -NHR oder -NH-C(O)-C₆H₅-R, worin R jeweils die im Anspruch 1 angegebene Bedeutung hat, trägt; einen unsubstituierten oder durch C₁-C₄-Alkyl, C₁-C₄-Alkoxy, Sulfo und/oder Halogen substituierten 1-Phenylpyrazol-5-on- oder 1-Phenyl-5-aminopyrazolrest; einen unsubstituierten oder durch C₁-C₄-Alkyl, C₁-C₄-Alkoxy, Sulfo und/oder Halogen substituierten Indolrest; oder einen unsubstituierten oder durch C₁-C₆-Alkyl, Sulfo, Hydroxy oder Phenylamino, welches seinerseits durch C₁-C₄-Alkyl, C₁-C₄-Alkoxy, Halogen oder Sulfo substituiert sein kann, substituierten Naphthylimidazolrest bedeutet.

6. Verbindungen gemäss einem der Ansprüche 1 bis 5, dadurch gekennzeichnet, dass R für Acryloyl, Methacryloyl, Chloracetyl, Bromacetyl, α-Chlor-oder α-Bromacryloyl oder α,β-Dichlor- oder α,β-Dibrompropionyl steht.

7. Verbindungen gemäss einem der Ansprüche 1 bis 6, dadurch gekennzeichnet, dass R für α-Bromacryloyl oder α,β-Dibrompropionyl steht.

8. Verbindungen gemäss einem der Ansprüche 1 bis 7, dadurch gekennzeichnet, dass Z Vinyl, β-Sulfatoethyl, β-Thiosulfatoethyl oder β-Phosphatoethyl bedeutet.

9. Verbindungen gemäss einem der Ansprüche 1 bis 8, dadurch gekennzeichnet, dass Z Vinyl oder β-Sulfatoethyl bedeutet.

10. Verbindungen gemäss einem der Ansprüche 1 bis 9 der Formel (1), dadurch gekennzeichnet, dass K eine oder zwei Sulfogruppen trägt und Z β-Sulfatoethyl bedeutet.

11. Verbindungen gemäss Anspruch 1 der Formel (1), worin
K den Rest einer Benzol-, Naphthalin-, Pyrazolon-, Aminopyrazol-, Pyridon-, Pyrimidin-, Indol-, Naphthylimidazol-, Diphenylamin-, Pyrazolo[2,3-a]pyrimidin-, Tetrahydrochinolin- oder Acetessigsäureamid-Kupplungskomponente bedeutet, der jeweils unsubstituiert oder durch C₁-C₆-Alkyl, C₁-C₄-Alkoxy, Phenoxy, gegebenenfalls durch Hydroxy substituiertes C₂-C₆-Alkanoylamino, Benzoylamino, Amino, gegebenenfalls im Alkylteil durch Hydroxy, C₁-C₄-Alkoxy, Carboxy, Cyano, Halogen, Sulfo, Sulfato, Phenyl oder Sulfophenyl substituiertes N-C₁-C₄-Alkyl- oder N,N-Di-C₁-C₄-Alkylamino, Cyclohexylamino, gegebenenfalls im Phenylteil durch C₁-C₄-Alkyl, C₁-C₄-Alkoxy, Halogen oder Sulfo substituiertes N-Phenylamino oder N-C₁-C₄-Alkyl-N-phenylamino, C₂-C₄-Alkoxycarbonyl, Trifluoromethyl, Nitro, Cyano, Halogen, Ureido, Hydroxy, Carboxy, Sulfo, Sulfomethyl, Carbamoyl, Sulfamoyl, gegebenenfalls im Phenylteil durch Sulfo oder Carboxy substituiertes N-Phenyl- oder N-C₁-C₄-Alkyl-N-phenylsulfamoyl, Methylsulfonyl, ein Reaktivrest -NHR oder -NH-C(O)-C₆H₅-R, und/oder durch unsubstituiertes oder durch C₁-C₄-Alkyl, C₁-C₄-Alkoxy, Halogen, Sulfo, Amino, N-C₁-C₄-Alkyl- oder N,N-Di-C₁-C₄-Alkylamino oder Phenylamino substituiertes Phenylazo oder Naphthylazo substituiert ist,
R Acryloyl, Methacryloyl, Chloracetyl, Bromacetyl, α-Chlor- oder α-Bromacryloyl oder α,β-Dichlor- oder α,β-Dibrompropionyl bedeutet, und
Z für Vinyl, β-Sulfatoethyl, β-Thiosulfatoethyl oder β-Phosphatoethyl steht.

12. Verbindungen gemäss Anspruch 2 der Formel (1a), worin
K einen Phenyl- oder Naphthylrest, der einen oder mehrere Substituenten aus der Gruppe Hydroxy, C₁-C₄-Alkoxy, Amino, N-C₁-C₄-Alkyl- oder N,N-Di-C₁-C₄-Alkylamino, Acetylamino, Benzoylamino, C₁-C₄-Alkyl, gegebenenfalls im Phenylteil durch Carboxy oder Sulfo substituiertes N-Phenylsulfamoyl oder N-C₁-C₄-Alkyl-N-phenylsulfamoyl, gegebenenfalls durch Sulfo substituiertes N-C₁-C₄-Alkyl-N-benzylamino, gegebenenfalls durch C₁-C₄-Alkyl, C₁-C₄-Alkoxy, Halogen, Sulfo, Amino, N-C₁-C₄-Alkyl- oder N,N-Di-C₁-C₄-Alkylamino oder Phenylamino substituiertes Phenylazo oder Naphthylazo, und Reaktivrest -NHR oder -NH-C(O)-C₆H₅-R trägt; einen unsubstituierten oder durch C₁-C₄-Alkyl, C₁-C₄-Alkoxy, Sulfo und/oder Halogen substituierten 1-Phenylpyrazol-5-on-oder 1-Phenyl-5-aminopyrazolrest; einen unsubstituierten oder durch C₁-C₄-Alkyl, C₁-C₄-Alkoxy, Sulfo und/oder Halogen substituierten Indolrest; oder einen unsubstituierten oder durch C₁-C₆-Alkyl, Sulfo, Hydroxy und/oder Phenylamino, welches seinerseits durch C₁-C₄-Alkyl, C₁-C₄-Alkoxy, Halogen oder Sulfo substituiert sein kann, substituierten Naphthylimidazolrest bedeutet,
R für α-Bromacryloyl oder α,β-Dibrompropionyl steht, und
Z Vinyl oder β-Sulfatoethyl ist.

13. Verfahren zur Herstellung von Verbindungen der Formel 1 gemäss Anspruch 1, dadurch gekennzeichnet, dass man eine Verbindung der Formel 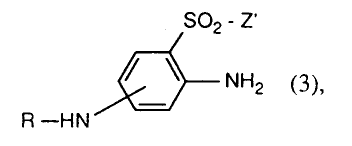 worin R die im Anspruch 1 angegebene Bedeutung hat und Z' unabhängig die im Anspruch 1 für Z angegebene Bedeutung hat oder für 2-Hydroxyethyl steht, diazotiert, die erhaltene Diazoniumverbindung mit einer Kupplungskomponente der Formel
K - H (4),
worin K die im Anspruch 1 angegebene Bedeutung hat, kuppelt, und wenn Z' 2-Hydroxyethyl ist, den Rest -SO₂Z' in einen beliebigen Rest -SO₂Z umwandelt.

14. Verwendung der Verbindungen der Formel (1) gemäss einem der Ansprüche 1 bis 12 als Farbstoffe zum Färben oder Bedrucken von Papier, Leder und hydroxylgruppenhaltigen und stickstoffhaltigen Fasermaterialien.

15. Verwendung gemäss Anspruch 14 zum Färben oder Bedrucken von Wolle.

16. Verbindungen der Formel 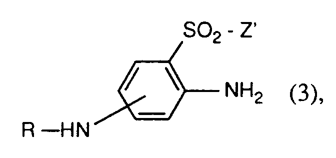
worin R einen Rest -C(O)-CH₂-X, -C(O)-C(X)=CH₂, -C(O)-CH(X)-CH₂-X, -C(O)-CH=CH₂ oder -C(O)-C(CH₃)=CH₂ darstellt;
X Halogen bedeutet;
Z' für β-Hydroxyethyl, Vinyl oder einen Rest -CH₂-CH₂-Y steht; und
Y -OSO₃H, -SSO₃H, -OPO(OH)₂, -OCOCH₃, -Cl oder einen Rest 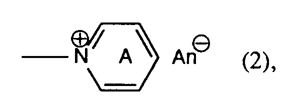 worin der Ring A gegebenenfalls durch Carboxyl oder Carbamoyl substituiert ist und An^{⊖} ein Anion ist, bedeutet.

## Claims

1. A compound of the formula 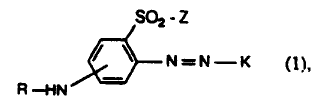 where
K is the radical of a coupling component of the benzene or naphthalene series or the heterocyclic series,
R is a radical -C(O)-CH₂-X, -C(O)-C(X)=CH₂, -C(O)-CH(X)-CH₂-X, -C(O)-CH=CH₂ or -C(O)-C(CH₃)=CH₂,
X is halogen,
Z is vinyl or a radical -CH₂CH₂-Y, and
Y is -OSO₃H, -SSO₃H, -OPO(OH)₂, -OCOCH₃, -Cl or a radical 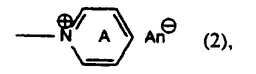 where the ring A is unsubstituted or substituted by carboxyl or carbamoyl and An^{⊖} is an anion.

2. A compound according to claim 1 of the formula 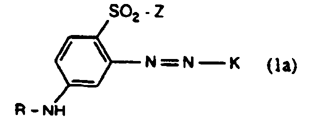 where K, R and Z are each as defined in claim 1.

3. A compound according to claim 1 or 2 wherein K is the radical of a benzene, naphthalene, pyrazolone, aminopyrazole, pyridone, pyrimidine, indole, naphthylimidazole, diphenylamine, pyrazolo[2.3-a]pyrimidine, tetrahydroquinoline or acetoacetamide coupling component.

4. A compound according to any one of claims 1 to 3, where the coupling component K is unsubstituted or substituted by C₁-C₆alkyl, C₁-C₄alkoxy, phenoxy, unsubstituted or hydroxyl-substituted C₂-C₆alkanoylamino, benzoylamino, amino, N-C₁-C₄alkyl- or N,N-di-C₁-C₄alkyl-amino which is unsubstituted or substituted by hydroxyl, C₁-C₄alkoxy, carboxyl, cyano, halogen, sulfo, sulfato, phenyl or sulfophenyl in the alkyl moiety, cyclohexylamino_{,} N-phenyl- or N-C₁-C₄alkyl-N-phenyl-amino which is unsubstituted or substituted by C₁-C₄alkyl, C₁-C₄alkoxy, halogen or sulfo in the phenyl moiety, C₂-C₄alkoxycarbonyl, trifluoromethyl, nitro, cyano, halogen, ureido, hydroxyl, carboxyl, sulfo, sulfomethyl, carbamoyl, sulfamoyl, N-phenyl- or N-C₁-C₄alkyl-N-phenyl-sulfamoyl, which is unsubstitued or substituted by sulfo or carboxyl in the phenyl moiety, methylsulfonyl, a reactive radical -NHR or -NH-C(O)-C₆H₅-R, where R is in each case as defined in claim 1, and/or by unsubstituted or C₁-C₄alkyl-, C₁-C₄alkoxy-, halogen-, sulfo-, amino-, N-C₁-C₄alkyl- or N,N-di-C₁-C₄alkyl-amino-or phenylamino-substituted phenylazo or naphthylazo.

5. A compound according to any one of claims 1 to 4, wherein K is a phenyl or naphthyl radical which carries one or more substituents selected from the group consisting of hydroxyl, C₁-C₄alkoxy, amino, N-C₁-C₄alkyl-or N,N-di-C₁-C₄alkyl-amino, acetylamino, benzoylamino, C₁-C₄alkyl, N-phenyl- or N-C₁-C₄alkyl-N-phenyl-sulfamoyl which is unsubstituted or substituted by carboxyl or sulfo in the phenyl moiety, unsubstituted or sulfo-substituted N-C₁-C₄alkyl-N-benzylamino, unsubstituted or C₁-C₄alkyl, C₁-C₄alkoxy-, halogen-, sulfo-, amino-, N-C₁-C₄alkyl- or N,N-di-C₁-C₄alkyl-amino-or phenylamino-substituted phenylazo or naphthylazo and a reactive radical -NHR or -NH-C(O)-C₆H₅-R, where R is in each case as defined in claim 1; an unsubstituted or C₁-C₄alkyl-, C₁-C₄alkoxy-, sulfo- and/or halogen-substituted 1-phenylpyrazol-5-one or 1-phenyl-5-aminopyrazole radical; an unsubstituted or C₁-C₄alkyl-, C₁-C₄alkoxy-, sulfo- and/or halogen-substituted indole radical; or a naphthylimidazole radical which is unsubstituted or substituted by C₁-C₆alkyl, sulfo, hydroxyl or phenylamino, which in turn is unsubstituted or substituted by C₁-C₄alkyl, C₁-C₄alkoxy, halogen or sulfo.

6. A compound according to any one of claims 1 to 5, wherein R is acryloyl, methacryloyl, chloroacetyl, bromoacetyl, α-chloro- or α-bromo-acryloyl or α,β-dichloro- or α,β-dibromo-propionyl.

7. A compound according to any one of claims 1 to 6, wherein R is α-bromoacryloyl or α,β-dibromopropionyl.

8. A compound according to any one of claims 1 to 7, wherein Z is vinyl, β-sulfatoethyl, β-thiosulfatoethyl or β-phosphatoethyl.

9. A compound according to any one of claims 1 to 8, wherein Z is vinyl or β-sulfatoethyl.

10. A compound according to any one of claims 1 to 9 of the formula (1), wherein K carries one or two sulfo groups and Z is β-sulfatoethyl.

11. A compound according to claim 1 of the formula (1) where
K is the radical of a benzene, naphthalene, pyrazolone, aminopyrazole, pyridone, pyrimidine, indole, naphthylimidazole, diphenylamine, pyrazolo[2.3-a]pyrimidine,tetrahydroquinoline or acetoacetamide coupling component, which is unsubstituted or substituted by C₁-C₆alkyl, C₁-C₄alkoxy, phenoxy, unsubstitued, or hydroxyl-substituted C₂-C₆alkanoylamino, benzoylamino, amino, N-C₁-C₄alkyl- or N,N-di-C₁-C₄alkyl-amino which is unsubstituted or substituted by hydroxyl, C₁-C₄alkoxy, carboxyl, cyano, halogen, sulfo, sulfato, phenyl or sulfophenyl in the alkyl moiety, cyclohexylamino, N-phenyl- or N-C₁-C₄alkyl-N-phenyl-amino which is unsubstituted or substituted by C₁-C₄alkyl, C₁-C₄alkoxy, halogen or sulfo in the phenyl moiety, C₂-C₄alkoxycarbonyl, trifluoromethyl nitro, cyano, halogen, ureido, hydroxyl, carboxyl, sulfo, sulfomethyl, carbamoyl, sulfamoyl, N-phenyl- or N-C₁-C₄alkyl-N-phenyl-sulfamoyl, which is unsubstituted or substituted by sulfo or carboxyl in the phenyl moiety, methylsulfonyl, a reactive radical -NHR or -NH-C(O)-C₆H₅-R, and/or by unsubstituted or C₁-C₄alkyl-, C₁-C₄alkoxy-, halogen-, sulfo-, amino-, N-C₁-C₄alkyl- or N,N-di-C₁-C₄alkyl-amino-or phenylamino-substituted phenylazo or naphthylazo, R is acryloyl, methacryloyl, chloroacetyl, bromoacetyl, α-chloro- or α-bromo-acryloyl or α,β-dichloro- or α,β-dibromo-propionyl, and
Z is vinyl, β-sulfatoethyl, β-thiosulfatoethyl or β-phosphatoethyl.

12. A compound according to claim 2 of the formula (1a) where
K is a phenyl or naphthyl radical which carries one or more substituents selected from the group consisting of hydroxyl, C₁-C₄alkoxy, amino, N-C₁-C₄alkyl- or N,N-di-C₁-C₄alkyl-amino, acetylamino, benzoylamino, C₁-C₄alkyl, N-phenyl- or N-C₁-C₄alkyl-N-phenyl-sulfamonyl which is unsubstituted or substituted by carboxyl or sulfo in the phenyl moiety, unsubstituted or sulfo-substituted N-C₁-C₄alkyl-N-benzylamino, unsubstituted or C₁-C₄alkyl-, C₁-C₄alkoxy-, halogen-, sulfo-, amino-, N-C₁-C₄alkyl- or N,N-di-C₁-C₄alkyl-amino-or phenylamino-substituted phenylazo or naphthylazo and a reactive radical -NHR or -NH-C(O)-CH₆H₅-R; an unsubstituted or C₁-C₄alkyl-, C₁-C₄alkoxy-, sulfo- and/or halogen-substituted 1-phenylpyrazol-5-one or 1-phenyl-5-aminopyrazole radical; an unsubstituted or C₁-C₄alkyl-, C₁-C₄alkoxy-, sulfo- and/or halogen-substituted indole radical; or a naphthylimidazole radical which is unsubstituted or substituted by C₁-C₆alkyl, sulfo, hydroxyl and/or phenylamino, which in turn can be substituted by C₁-C₄alkyl, C₁-C₄alkoxy, halogen or sulfo,
R is α-bromoacryloyl or α,β-dibromopropionyl, and
Z is vinyl or β-sulfatoethyl.

13. A process for preparing a compound of the formula 1 according to claim 1, which comprises diazotizing a compound of the formula 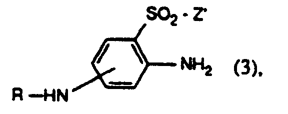 where R is as defined in claim 1 and Z' independently has the meaning assigned in claim 1 to Z or is 2-hydroxyethyl, coupling the resulting diazonium compound with a coupling component of the formula
K - H (4)
where K is as defined in claim 1, and if Z' is 2-hydroxyethyl, converting the radical -SO₂Z' into any desired radical -SO₂Z.

14. The use of the compounds of the formula (1) according to any one of claims 1 to 12 as dyes for dyeing or printing paper, leather and hydroxyl-containing and nitrogen-containing fibre materials.

15. The use according to claim 14 for dyeing or printing wool.

16. A compound of the formula 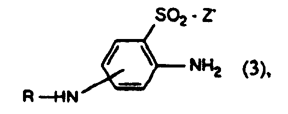
where R is a radical -C(O)-CH₂-X, -C(O)-C(X)=CH₂, -C(O)-CH(X)-CH₂-X, -C(O)-CH=CH₂ or C(O)-C(CH₃)=CH₂,
X is halogen,
Z' is β-hydroxyethyl, vinyl or a radical -CH₂-CH₂-Y, and
Y is -OSO₃H, -SSO₃H, -OPO(OH)2, -OCOCH₃, -C₁ or a radical 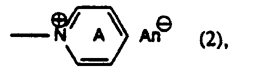 where the ring A is unsubstituted or substituted by carboxyl or carbamoyl and An^{⊖} is an anion.

## Revendications

1. Composés de formule 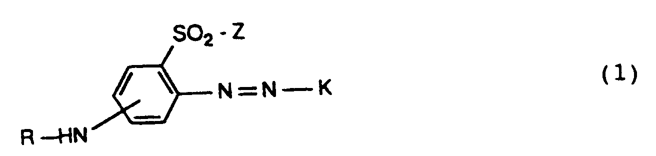 dans laquelle
K représente un reste d'un composant de copulation de la famille du benzène ou du naphtalène ou de la famille des hétérocycliques ;
R représente un reste -C(O)-CH₂-X, C(O)-C(X)=CH₂, -C(O)-CH(X)-CH₂-X, -C(O)-CH=CH₂ ou -C(O)-C(CH₃)=CH₂ ;
X représente un atome d'halogène ;
Z représente un groupe vinyle ou un reste -CH₂-CH₂-Y ; et
Y représente -OSO₃H, -SSO₃H, -OPO(OH)₂, -OCOCH₃, -Cl ou un reste de formule 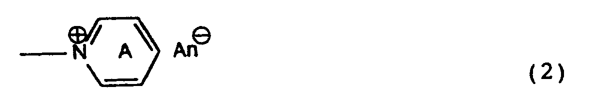 dans laquelle le cycle A est éventuellement substitué par un groupe carboxyle ou carbamoyle et An^{Θ} est un anion.

2. Composés selon la revendication 1 de formule 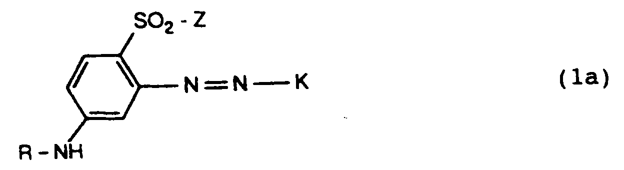 dans laquelle K, R et Z possèdent chacun la signification donnée à la revendication 1.

3. Composés selon la revendication 1 ou 2, caractérisés en ce que K représente le reste d'un composant de copulation du type benzène, naphtalène, pyrazolone, aminopyrazole, pyridone, pyrimidine, indole, naphtylimidazole, diphénylamine, pyrazolo[2,3-a]-pyrimidine, tétrahydroquinoléine ou acétacétamide.

4. Composés selon l'une des revendications 1 à 3, caractérisés en ce que le composant de copulation K est non substitué ou substitué par des groupes alkyle en C₁-C₆, alkoxy en C₁-C₄, phénoxy, amino, benzoylamino, (alcanoyl en C₁-C₆)amino éventuellement substitué par un substituant hydroxy, des groupes N-(alkyl en C₁-C₄)-amino ou N,N-di-(alkyl en C₁-C₄)amino éventuellement substitué sur le fragment alkyle par des substituants hydroxy, alkoxy en C₁-C₄, carboxy, cyano, halogène, sulfo, sulfato, phényle ou sulfophényle, cyclohexylamino, N-phénylamino ou N-(alkyl en C₁-C₄)-N-phénylamino éventuellement substitué sur le fragment phényle par des substituants alkyle en C₁-C₄, alkoxy en C₁-C₄, halogène ou sulfo, (alkoxy en C₂-C₄)carbonyle, trifluorométhyle, nitro, cyano, halogène, uréido, hydroxy, carboxy, sulfo, sulfométhyle, carbamoyle, sulfamoyle, N-phényl- ou N-(alkyl en C₁-C₄)-N-phényl-sulfamoyle éventuellement substitués sur le fragment phényle par des substituants sulfo ou carboxy, méthylsulfonyle, un reste réactif -NHR ou -NH-C(O)-C₆H₅-R, où R possède chaque fois la signification donnée à la revendication 1 et/ou phénylazo ou naphtylazo non substitué ou substitué par des substituants alkyle en C₁-C₄, alkoxy en C₁-C₄, halogène, sulfo, amino, N-(alkyl en C₁-C₄)- ou N,N-di-(alkyl en C₁-C₄)amino ou phénylamino.

5. Composés selon l'une des revendications 1 à 4, caractérisés en ce que K représente un reste phényle ou naphtyle qui porte un ou plusieurs substituants pris dans le groupe comportant des substituants hydroxy, alkoxy en C₁-C₄, amino, N-(alkyl en C₁-C₄)- ou N,N-di-(alkyl en C₁-C₄)-amino, acétylamino, benzoylamino, alkyle en C₁-C₄, N-phénylsulfamoyle ou N-(alkyl en C₁-C₄)-N-phénylsulfamoyle éventuellement substitué sur le fragment phényle par des substituants carboxy ou sulfo, N-(alkyl en C₁-C₄)-N-benzylamino éventuellement substitué par un substituant sulfo, des restes phénylazo ou naphtylazo éventuellement substitués par des substituants alkyle en C₁-C₄, alkoxy en C₁-C₄, halogène, sulfo, amino, N-(alkyl en C₁-C₄)- ou N,N-di-(alkyl en C₁-C₄)amino ou phénylamino et un reste réactif -NHR ou -NH-C(O)-C₆H₅-R, où R possède chaque fois la signification donnée à la revendication 1 ; un reste 1-phénylpyrazol-5-one ou 1-phényl-5-aminopyrazole non substitué ou substitué par des substituants alkyle en C₁-C₄, alkoxy en C₁-C₄, sulfo et/ou halogène ; un reste indole non substitué ou substitué par des substituants alkyle en C₁-C₄, alkoxy en C₁-C₄, sulfo et/ou halogène ; ou un reste naphtylimidazole non substitué ou substitué par des substituants alkyle en C₁-C₆, sulfo, hydroxy ou phénylamino, lequel peut être substitué de son côté par des substituants alkyle en C₁-C₄, alkoxy en C₁-C₄, halogène ou sulfo.

6. Composés selon l'une des revendications 1 à 5, caractérisés en ce que R représente des groupes acryloyle, méthacryloyle, chloracétyle, bromacétyle, α-chloracryloyle ou α-bromacryloyle ou α,β-dichloro- ou α,β-dibromopropionyle.

7. Composés selon l'une des revendications 1 à 6, caractérisés en ce que T représente les groupes α-bromacryloyle ou α,β-dibromopropionyle.

8. Composés selon l'une des revendications 1 à 7, caractérisés en ce que Z représente des groupes vinyle, β-sulfatoéthyle, β-thiosulfatoéthyle ou β-phosphatoéthyle.

9. Composés selon l'une des revendications 1 à 8, caractérisés en ce que Z représente un groupe vinyle ou β-sulfatoéthyle.

10. Composés selon l'une des revendications 1 à 9, caractérisés en ce que K porte un ou deux groupes sulfo et Z représente le groupe β-sulfatoéthyle.

11. Composés selon la revendication 1, de formule (1) où
K représente le reste d'un composant de copulation du type benzène, naphtalène, pyrazolone, aminopyrazole, pyridone, pyrimidine, indole, naphtylimidazole, diphénylamine, pyrazolo-[2,3-a]-pyrimidine, tétrahydroquinoléine ou acétacétamide, lequel est chaque fois non substitué ou substitué par des groupes alkyle en C₁-C₆, alkoxy en C₁-C₄, phénoxy, amino, benzoylamino, (alcanoyl en C₁-C₆)-amino éventuellement substitué par un substituant hydroxy, N-(alkyl en C₁-C₄)amino ou N,N-di-(alkyl en C₁-C₄)amino éventuellement substitué sur le fragment alkyle par des substituants hydroxy, alkoxy en C₁-C₄, carboxy, cyano, halogène, sulfo, sulfato, phényle ou sulfophényle, cyclohexylamino, N-phénylamino ou N-(alkyl en C₁-C₄)-N-phénylamino éventuellement substitué sur le fragment phényle par des substituants alkyle en C₁-C₄, alkoxy en C₁-C₄, halogène ou sulfo, (alkoxy en C₂-C₄)-carbonyle, trifluorométhyle, nitro, cyano, halogène, uréido, hydroxy, carboxy, sulfo, sulfométhyle, carbamoyle, sulfamoyle, N-phényl-ou N-(alkyl en C₁-C₄)-N-phénylsulfamoyle éventuellement substitué sur le fragment phényle par des substituants sulfo ou carboxy, méthylsulfonyle, un reste réactif -NHR ou -NH-C(O)-C₆H₅-R et/ou phénylazo ou naphtylazo non substitué ou substitué par des substituants alkyle en C₁-C₄, alkoxy en C₁-C₄, halogène, sulfo, amino, N-(alkyl en C₁-C₄)- ou N,N-di-(alkyl en C₁-C₄)-amino ou phénylamino,
R représente des groupes acryloyle, méthacryloyle, chloracétyle, bromacétyle, α-chloracryloyle ou α-bromacryloyle ou α,β-dichloro- ou α,β-dibromopropionyle et
Z représente des groupes vinyle, β-sulfatoéthyle, β-thiosulfatoéthyle ou β-phosphatoéthyle.

12. Composés selon la revendication 2 de formule (1a) où
K représente un reste reste phényle ou naphtyle qui porte un ou plusieurs substituants pris dans le groupe comportant des substituants hydroxy, alkoxy en C₁-C₄, amino, N-(alkyl en C₁-C₄)- ou N,N-di-(alkyl en C₁-C₄)-amino, acétylamino, benzoylamino, alkyle en C₁-C₄, N-phénylsulfamoyle ou N-(alkyl en C₁-C₄)-N-phénylsulfamoyle éventuellement substitué sur le fragment phényle par des substituants carboxy ou sulfo, N-(alkyl en C₁-C₄)-N-benzylamino éventuellement substitué par un substituant sulfo, phénylazo ou naphtylazo éventuellement substitué par des substituants alkyle en C₁-C₄, alkoxy en C₁-C₄, halogène, sulfo, amino, N-(alkyl en C₁-C₄)-ou N,N-di-(alkyl en C₁-C₄)-amino ou phénylamino et un reste réactif -NHR ou -NH-C(O)-C₆H₅-R ; un reste 1-phénylpyrazol-5-one ou 1-phényl-5-aminopyrazole non substitué ou substitué par des substituants alkyle en C₁-C₄, alkoxy en C₁-C₄, sulfo et/ou halogène ; un reste indole non substitué ou substitué par des substituants alkyle en C₁-C₄, alkoxy en C₁-C₄, sulfo et/ou halogène ; et un reste naphtylimidazole non substitué ou substitué par des substituants alkyle en C₁-C₆, sulfo, hydroxy et/ou phénylamino, lequel peut être substitué de son côté par des substituants alkyle en C₁-C₄, alkoxy en C₁-C₄, halogène ou sulfo,
R représente un groupe α-bromacryloyle ou α,β-dibromopropionyle, et
Z représente un groupe vinyle ou β-sulfatoéthyle.

13. Procédé de préparation de composés de formule l selon la revendication 1, caractérisé en ce qu'on diazote un composé de formule 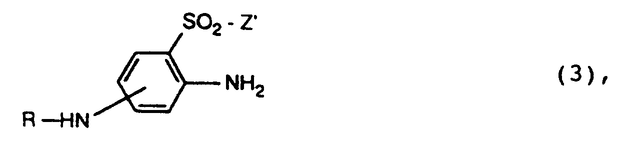 dans laquelle R possède la signification donnée à la revendication 1 et Z' possède indépendamment la signification donnée pour Z ou représente un groupe 2-hydroxyéthyle, on transforme le composé de diazonium obtenu par un composant de copulation de formule
K-H (4),
où K possède la signification donnée à la revendication 1, et lorsque Z' représente le groupe 2-hydroxyéthyle, on transforme le reste -SO₂Z' en un reste -SO₂Z arbitraire.

14. Utilisation des composés de formule (1) selon l'une des revendications 1 à 12 comme colorants pour la teinture ou l'impression de papier, de cuir et de matières fibreuses présentant des groupes hydroxyle et des atomes d'azote.

15. Utilisation selon la revendication 14 pour la teinture ou l'impression de laine.

16. Composés de formule 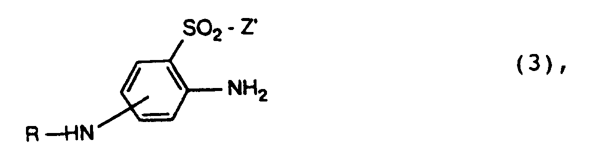 où
R représente un reste -C(O)-CH₂-X, -C(O)-C(X)=CH₂, -C(O)-CH(X)-CH₂-X, -C(O)-CH=CH₂ ou -C(O)-C(CH₃)=CH₂ ;
X représente un atome d'halogène ;
Z représente un groupe vinyle ou un reste -CH₂-CH₂-Y ; et
Y représente -OSO₃H, -SSO₃H, -OPO(OH)₂, -OCOCH₃, -Cl ou un reste de formule 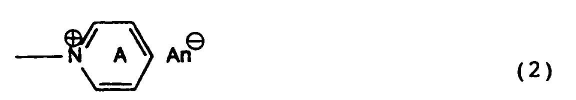 dans laquelle le cycle A est éventuellement substitué par un groupe carboxyle ou carbamoyle et An^{Θ} est un anion.
